# EUROPEAN PATENT SPECIFICATION

(11) **EP 2 837 900 B1**
(45) Date of publication and mention of the grant of the patent: **31.05.2017**
(21) Application number: 13776273.8
(22) Date of filing: 01.04.2013
(51) Int. Cl.: F25B 1/00, F25B 13/00, F25B 41/06, F24F 1/40, F25B 49/02

(54) **AIR-CONDITIONING DEVICE**
KLIMAANLAGE
DISPOSITIF DE CLIMATISATION

(30) Priority: 09.04.2012 JP 2012088669
(43) Date of publication of application: 18.02.2015
(73) Proprietor: Daikin Industries, Ltd., Osaka-shi, Osaka 530-8323 (JP)
(72) Inventor: KANAZAWA, Yukako, Osaka-shi, Osaka 530-8323 (JP); SHIMODA, Junichi, Osaka-shi, Osaka 530-8323 (JP); MAKINO, Tatsuya, Osaka-shi, Osaka 530-8323 (JP)
(74) Representative: Hoffmann Eitle
(86) International application number: PCT/JP2013/059857
(87) International publication number: WO 2013/153980

(56) References cited:
- WO-A1-2012/039450
- JP-A- 2004 101 082
- JP-A- 2004 183 982
- JP-A- 2007 032 980
- JP-A- 2009 210 139
- US-A- 5 305 822
- US-A1- 2007 266 719
- US-A1- 2008 000 245

## Description

### TECHNICAL FIELD

The present invention relates to an air conditioner, and in particular, to an air conditioner which performs a cooling operation by driving an outdoor fan and circulating refrigerant in order of a compressor, an outdoor heat exchanger, an expansion valve, and an indoor heat exchanger.

### BACKGROUND ART

There is an air conditioner which performs a cooling operation in the background art such as shown in PTL 1 (Japanese Unexamined Patent Application Publication No. 9-133434). In detail, the air conditioner has a refrigerant circuit which is configured by connecting a compressor, an outdoor heat exchanger, an expansion valve, and an indoor heat exchanger and an outdoor fan which supplies outdoor air to the outdoor heat exchanger as a source for cooling of refrigerant which flows through the outdoor heat exchanger. Then, a cooling operation is performed in the air conditioner by driving the outdoor fan and circulating refrigerant in order of the compressor, the outdoor heat exchanger, the expansion valve, and the indoor heat exchanger. An air conditioner according to the preamble of claim 1 is disclosed in US 5305822 A.

### SUMMARY OF THE INVENTION

There is a problem in the air conditioner in the background art in terms of cavitation noise in the expansion valve during the cooling operation, and the inner diameter size of refrigerant pipes at inlet and outlet ports of the expansion valve is devised with regard to the problem of cavitation noise in the expansion valve.

However, the cavitation noise in the expansion valve most remarkably appears when starting the cooling operation under low temperature conditions such as when the outdoor temperature is low. Then, it is not possible for the inner diameter size of the refrigerant pipes at inlet and outlet ports of the expansion valve in the air conditioner in the background art to be devised to sufficiently suppress the cavitation noise in the expansion valve when starting the cooling operation under the low temperature conditions.

The object of the invention is, in an air conditioner which performs a cooling operation by driving an outdoor fan and circulating refrigerant in order of a compressor, an outdoor heat exchanger, an expansion valve, and an indoor heat exchanger, to sufficiently suppress cavitation noise in the expansion valve when starting the cooling operation under low temperature conditions.

An air conditioner according to a first aspect of the present invention is an air conditioner which has a refrigerant circuit which is configured by connecting a compressor, an outdoor heat exchanger, an expansion valve, and an indoor heat exchanger and an outdoor fan which supplies outdoor air to the outdoor heat exchanger as a source for cooling of refrigerant which flows through the outdoor heat exchanger. A control section of the air conditioner performs a cooling operation by driving the outdoor fan and circulating refrigerant in order of the compressor, the outdoor heat exchanger, the expansion valve, and the indoor heat exchanger. The air conditioner performs an expansion valve refrigerant discharge control when a cooling start noise reduction condition that a state of refrigerant at inlet and outlet ports of the expansion valve is in a one-phase liquid state is satisfied when starting the cooling operation and performs an expansion valve normal switching control after the expansion valve refrigerant discharge control. The expansion valve coolant discharge control is a control where the compressor is driven in a state where the outdoor fan is stopped and the expansion valve is open. The expansion valve normal switching control is a control where an opening of the expansion valve is reduced and an operating frequency of the compressor is increased.

The inventors of the present application focus on the relationship between cavitation noise in the expansion valve and the state of refrigerant at the inlet and outlet ports of the expansion valve. Then, it was found that refrigerant at the inlet and outlet ports of the expansion valve is in the one-phase liquid state when starting the cooling operation under low temperature conditions, and due to the effect of this, cavitation noise in the expansion valve is remarkable. That is, it was found that the state of refrigerant at the inlet and outlet ports of the expansion valve when starting the cooling operation affects cavitation noise in the expansion valve. That is, cavitation noise in the expansion valve remarkably appears when starting the cooling operation when there is no change in the state where liquid refrigerant has accumulated at the inlet and outlet ports of the expansion valve. However, cavitation noise in the expansion valve is suppressed when starting the cooling operation in a state where liquid refrigerant has not accumulated at the inlet and outlet ports of the expansion valve.

Therefore, in the air conditioner according to the first aspect of the present invention, by considering the state of refrigerant at the inlet and outlet ports of the expansion valve, it is determined whether or not the cooling start noise reduction condition, which shows that the state of refrigerant at the inlet and outlet ports of the expansion valve is in the one-phase liquid state, is satisfied when starting the cooling operation. Then, in the case where the cooling start noise reduction condition is satisfied, the expansion valve refrigerant discharge control is performed so that the compressor is driven in the state where the outdoor fan is stopped and the expansion valve is open. Then, after the expansion valve refrigerant discharge control, the expansion valve normal switching control is performed so that the opening of the expansion valve is reduced and the operating frequency of the compressor is increased.

Due to this, in the air conditioner according to the first aspect of the present invention, it is determined whether or not the cooling operation is starting under the low temperature conditions due to the state of refrigerant at the inlet and outlet ports of the expansion valve which is a direct indicator of whether or not there are conditions where cavitation noise in the expansion valve will remarkably appear. Then, due to the expansion valve refrigerant discharge control being performed in the case where the cooling start noise reduction condition is satisfied, the state is created where liquid refrigerant has not accumulated at the inlet and outlet ports of the expansion valve by discharging liquid refrigerant at the expansion valve and the inlet and outlet ports thereof to the indoor heat exchanger side. That is, liquid refrigerant smoothly flows to the indoor heat exchanger side while as little liquid refrigerant as possible is supplied to the expansion valve by suppressing refrigerant condensing performance in the outdoor heat exchanger due to the outdoor fan being stopped and the expansion valve being open when driving the compressor. Then, cavitation noise in the expansion valve is suppressed by switching the expansion valve to normal control due to the expansion valve normal switching control being performed in a state where the state is created where liquid refrigerant has not accumulated at the inlet and outlet ports of the expansion valve due to the expansion valve refrigerant discharge control.

In this manner, in the air conditioner according to the first aspect of the present invention, it is possible to sufficiently suppress cavitation noise in the expansion valve when starting the cooling operation under the low temperature conditions due to the expansion valve refrigerant discharge control and the expansion valve normal switching control being performed in the case where the cooling start noise reduction condition is satisfied.

An air conditioner according to a second aspect of the present invention is the air conditioner according to the first aspect of the present invention where it is determined that the cooling start noise reduction condition is satisfied in a case where an expansion valve reference temperature which is a temperature of refrigerant at the inlet and outlet ports of the expansion valve or a temperature in the outdoor heat exchanger or an outside air temperature is lower than a noise countermeasure determining temperature which is a threshold which is obtained from a temperature of the indoor heat exchanger or an indoor temperature.

It is possible for refrigerant at the inlet and outlet ports of the expansion valve to be equal to or lower than a refrigerant saturation temperature in a case where the expansion valve reference temperature which is the temperature of refrigerant at the inlet and outlet ports of the expansion valve or the equivalent temperature is reduced to a temperature which is close to a temperature on the indoor side when starting the cooling operation.

Therefore, in the air conditioner according to the second aspect of the present invention, it is determined that the cooling start noise reduction condition is satisfied in the case where the expansion valve reference temperature which is the temperature of refrigerant at the inlet and outlet ports of the expansion valve is lower than the noise countermeasure determining temperature which is a threshold which is obtained from the temperature of the indoor heat exchanger. Here, by providing a temperature sensor at the inlet and outlet ports of the expansion valve, it is possible to use a temperature value which is detected by the temperature sensor as the expansion valve reference temperature. In addition, in a case of providing a temperature sensor which detects a temperature in the outdoor heat exchanger and an outdoor temperature, a temperature value which is detected by the temperature sensor may be used as a temperature which is equivalent to the temperature of refrigerant at the inlet and outlet ports of the expansion valve. In addition, in a case of providing a temperature sensor which detects the temperature of the indoor heat exchanger, it is possible to use a threshold which is obtained from a temperature value which is detected by the temperature sensor. In addition, in a case of providing the temperature sensor which detects an indoor temperature, a temperature value which is detected by the temperature sensor may be used as a temperature which is equivalent to the temperature of the indoor heat exchanger.

Due to this, in the air conditioner according to the second aspect of the present invention, it is possible to correctly determine whether or not the cooling start noise reduction condition is satisfied using the expansion valve reference temperature and the noise countermeasure determining temperature.

An air conditioner according to a third aspect of the present invention is the air conditioner according to the first or second aspect of the present invention where the operating frequency of the compressor in the expansion valve refrigerant discharge control is set to a noise reduction activation frequency which is lower than an activation frequency which is an operating frequency of the compressor when starting the cooling operation in a case where the cooling start noise reduction condition is not satisfied.

Liquid refrigerant flows smoothly through the expansion valve to the indoor heat exchanger side by opening the expansion valve in the expansion valve refrigerant discharge control. However, there is a concern that liquid refrigerant will return from the indoor heat exchanger side to the compressor if the operating frequency of the compressor is high.

Therefore, in the air conditioner according to the third aspect of the present invention, the operating frequency of the compressor in the expansion valve refrigerant discharge control is set to the noise reduction activation frequency which is lower than the activation frequency when starting the cooling operation in the case where the cooling start noise reduction condition is not satisfied.

Due to this, in the air conditioner according to the third aspect of the present invention, it is possible to suppress the concern that liquid refrigerant will return from the indoor heat exchanger side to the compressor while obtaining a smooth flow of liquid refrigerant to the indoor heat exchanger side in the expansion valve refrigerant discharge control.

An air conditioner according to a fourth aspect of the present invention is the air conditioner according to the first to third aspects of the present invention where the opening of the expansion valve in the expansion valve coolant discharge control is set to a noise reduction activation opening which is larger than an activation opening which is the opening of the expansion valve when starting the cooling operation in a case where the cooling start noise reduction condition is not satisfied.

Liquid refrigerant flows smoothly through the expansion valve to the indoor heat exchanger side by opening the expansion valve in the expansion valve refrigerant discharge control. However, at this time, there is a concern that flow path resistance when refrigerant passes through the expansion valve will be large if the opening of the expansion valve is small and smooth flow of liquid refrigerant to the indoor heat exchanger side will be impeded.

Therefore, in the air conditioner according to the fourth aspect of the present invention, the opening of the expansion valve in the expansion valve refrigerant discharge control is set to the noise reduction activation opening which is larger than the activation opening when starting the cooling operation in the case where the cooling start noise reduction condition is not satisfied.

Due to this, in the air conditioner according to the fourth aspect of the present invention, it is possible to reliably obtain a smooth flow of liquid refrigerant to the indoor heat exchanger side in the expansion valve refrigerant discharge control by the flow path resistance when liquid refrigerant passes through the expansion valve being as small as possible.

An air conditioner according to a fifth aspect of the present invention is the air conditioner according to the first to fourth aspects of the present invention where the opening of the expansion valve is reduced by the control section before the operating frequency of the compressor is increased when switching from the expansion valve refrigerant discharge control to the expansion valve normal switching control.

A case is assumed where an action of reducing the opening of the expansion valve is performed after the operating frequency of the compressor is increased when switching from the expansion valve refrigerant discharge control to the expansion valve normal switching control. In this case, due to the state, which is only temporary, where the operating frequency of the compressor is high in a state where the opening of the expansion valve is large, there is a concern that liquid refrigerant will return from the indoor heat exchanger side to the compressor.

Therefore, in the air conditioner according to the fifth aspect of the present invention, the opening of the expansion valve is reduced before the operating frequency of the compressor is increased when switching from the expansion valve refrigerant discharge control to the expansion valve normal switching control.

Due to this, in the air conditioner according to the fifth aspect of the present invention, it is possible to suppress the concern that liquid refrigerant will return from the indoor heat exchanger side to the compressor after the expansion valve coolant discharge control.

An air conditioner according to a sixth aspect of the present invention is the air conditioner according to the first to fifth aspects of the present invention where the opening of the expansion valve is reduced by the control section in a state where the operating frequency of the compressor is temporarily reduced when switching from the expansion valve refrigerant discharge control to the expansion valve normal switching control.

A case is assumed where an action of reducing the opening of the expansion valve is performed while the operating frequency of the compressor is maintained as it is when switching from the expansion valve refrigerant discharge control to the expansion valve normal switching control. In this case, there is a tendency for a pressure of refrigerant to be raised at a portion of the refrigerant circuit on an upstream side of the expansion valve. If this is the case, there are several concerns with a state where the inlet and outlet ports in the expansion valve are filled again with liquid refrigerant even if a state is created where the flow rate of liquid refrigerant which flows into the expansion valve increases and liquid refrigerant has not accumulated at the inlet and outlet ports of the expansion valve due to the expansion valve refrigerant discharge control.

Therefore, in the air conditioner according to the sixth aspect of the present invention, the opening of the expansion valve is reduced in a state where the operating frequency of the compressor is temporarily reduced when switching from the expansion valve refrigerant discharge control to the expansion valve normal switching control.

Due to this, in the air conditioner according to the sixth aspect of the present invention, it is possible to suppress the state where the inlet and outlet ports in the expansion valve are filled again with liquid refrigerant after the expansion valve refrigerant discharge control by suppressing the tendency for the pressure of refrigerant to be raised at the portion of the refrigerant circuit on the upstream side of the expansion valve.

An air conditioner according to a seventh aspect of the present invention is the air conditioner according to the first to sixth aspects of the present invention where the expansion valve is provided in the refrigerant circuit in a state with an arrangement where refrigerant flows in with a horizontal orientation and refrigerant flows out in a downward direction during the cooling operation.

There is a tendency for it to be easy for cavitation noise in the expansion valve to be generated in a configuration where the expansion valve is provided in the refrigerant circuit in the state with an arrangement where refrigerant flows in with the horizontal orientation and refrigerant flows out in a downward direction during the cooling operation (referred to below as "positive cycle arrangement state").

However, in the air conditioner according to the seventh aspect of the present invention, it is possible to sufficiently suppress cavitation noise in the expansion valve even if the expansion valve is arranged in the positive cycle arrangement state due to the expansion valve refrigerant discharge control and the expansion valve normal switching control being performed.

### BRIEF DESCRIPTION OF THE DRAWINGS

Fig. 1 is a schematic configuration diagram of an air conditioner according to an embodiment of the present invention.
Fig. 2 is a schematic cross sectional diagram of an expansion valve.
Fig. 3 is a control block diagram of the air conditioner.
Fig. 4 is a flow chart of a cooling activation control.
Fig. 5 is a time chart for a compressor, an outdoor fan, and the expansion valve during the cooling activation control (in a case where a cooling start noise reduction condition is satisfied).

### DESCRIPTION OF EMBODIMENTS

An embodiment of an air conditioner according to the present invention will be described below based on the drawings. Here, the detailed configuration of the air conditioner according to the present invention is not limited to the embodiment described below and modifications are possible within a scope which does not depart from the gist of the invention.

### (1) Air Conditioner Configuration

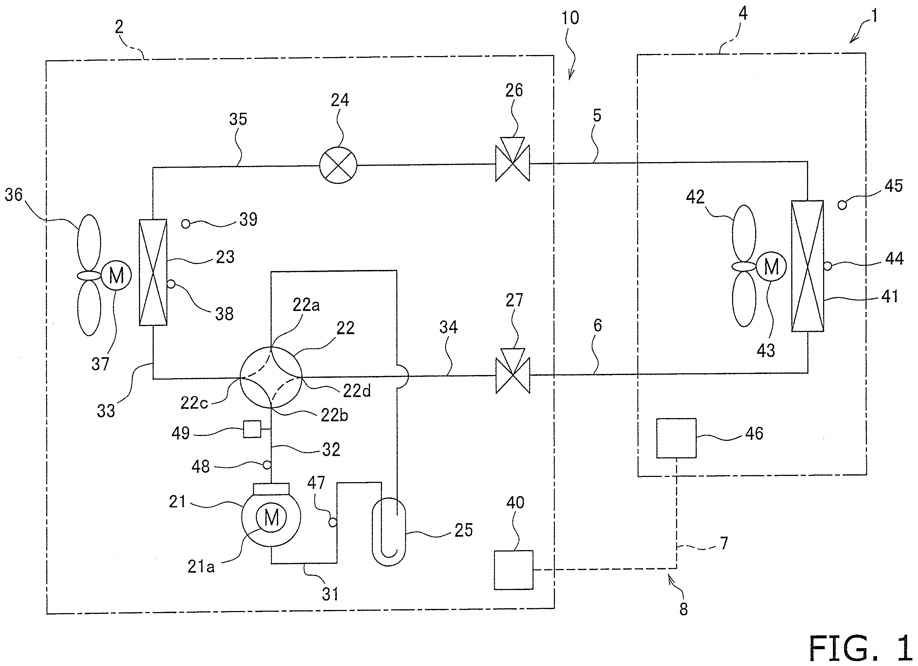

Fig. 1 is a schematic configuration diagram of an air conditioner 1 according to an embodiment of the present invention.

The air conditioner 1 is an apparatus which is able to perform cooling and heating indoors such as in a building by performing a vapor compression refrigerating cycle. The air conditioner 1 is mainly configured by connecting an outdoor unit 2 and an indoor unit 4. Here, the outdoor unit 2 and the indoor unit 4 are connected via a liquid refrigerant linking pipe 5 and a gas refrigerant linking pipe 6. That is, a vapor compression refrigerant circuit 10 in the air conditioner 1 is configured by the outdoor unit 2 and the indoor unit 4 being connected via the refrigerant linking pipes 5 and 6.

### <Indoor Unit>

The indoor unit 4 is arranged indoors and configures a portion of the refrigerant circuit 10. The indoor unit 4 mainly has an indoor heat exchanger 41.

The indoor heat exchanger 41 is a heat exchanger which cools indoor air with a function as an evaporator for refrigerant during a cooling operation and which heats indoor air with a function as a radiator for refrigerant during a heating operation. The liquid side of the indoor heat exchanger 41 is connected with the liquid refrigerant linking pipe 5 and the gas side of the indoor heat exchanger 41 is connected with the gas refrigerant linking pipe 6.

The indoor unit 4 has an indoor fan 42 for sucking indoor air into the indoor unit 4 and supplying the indoor air to indoors as supply air after indoor air has exchanged heat with refrigerant in the indoor heat exchanger 41. That is, the indoor unit 4 has an indoor fan 42 as a fan which supplies indoor air to the indoor heat exchanger 41 as a source for heating or a source for cooling of refrigerant which flows in the indoor heat exchanger 41. Here, a centrifugal fan, a multi-blade fan, or the like, which is driven by an indoor fan motor 43, is used as the indoor fan 42.

Various types of sensors are provided in the indoor unit 4. In detail, an indoor heat exchanger temperature sensor 44, which detects a temperature Trr of refrigerant in the indoor heat exchanger 41, is provided in the indoor heat exchanger 41. An indoor air temperature sensor 45, which detects a temperature Tra of indoor air which is sucked into the indoor unit 4, is provided in the indoor unit 4.

The indoor unit 4 has an indoor side control section 46 which controls the actions of each section which configures the indoor unit 4. Then, the indoor side control section 46 has a microcomputer, a memory, and the like which are provided in order to perform controlling of the indoor unit 4 and it is possible to perform exchanging of control signals and the like between the indoor side control section 46 and a remote control (which is not shown in the diagram) and perform exchanging of control signals and the like between the indoor side control section 46 and the outdoor unit 2 via a transmission wire 7.

### <Outdoor Unit>

The outdoor unit 2 is arranged outdoors and configures a portion of the refrigerant circuit 10. The outdoor unit 2 mainly has a compressor 21, a four way valve 22, an outdoor heat exchanger 23, an expansion valve 24, an accumulator 25, a liquid side shut-off valve 26, and a gas side shut-off valve 27.

The compressor 21 is a device which compresses until low-pressure refrigerant in the refrigerating cycle reaches a high pressure. The compressor 21 has a sealed structure where a positive displacement compressor element such as a rotary type or a scroll type (which is not shown in the diagram) is rotationally driven by a compressor motor 21 a which is controlled by an inverter. The suction side of the compressor 21 is connected with a suction pipe 31 and the discharge side of the compressor 21 is connected with a discharge pipe 32. The suction pipe 31 is a coolant pipe which connects the suction side of the compressor 21 and a first port 22a of the four way valve 22. The discharge pipe 32 is a coolant pipe which connects the discharge side of the compressor 21 and a second port 22b of the four way valve 22.

The four way valve 22 is a switching valve for switching the direction of the flow of refrigerant in the refrigerant circuit 10. The four way valve 22 performs switching of the cooling cycle state during the cooling operation so that the outdoor heat exchanger 23 functions as a radiator for refrigerant which is compressed in the compressor 21 and the indoor heat exchanger 41 functions as an evaporator for refrigerant which releases heat in the outdoor heat exchanger 23. That is, the four way valve 22 performs switching during the cooling operation so that the second port 22b and a third port 22c communicate and the first port 22a and a fourth port 22d communicate. Due to this, the discharge side of the compressor 21 (here, the discharge pipe 32) and the gas side of the outdoor heat exchanger 23 (here, a first gas coolant pipe 33) are connected (refer to the solid line in the four way valve 22 in Fig. 1). Moreover, the suction side of the compressor 21 (here, the suction pipe 31) and the gas refrigerant linking pipe 6 side (here, a second gas refrigerant pipe 34) are connected (refer to the solid line in the four way valve 22 in Fig. 1). In addition, the four way valve 22 performs switching of the heating cycle state during the heating operation so that the outdoor heat exchanger 23 functions as an evaporator for refrigerant which releases heat in the outdoor heat exchanger 23 and the indoor heat exchanger 41 functions as a radiator for refrigerant which is compressed in the compressor 21. That is, the four way valve 22 performs switching during the heating operation so that the second port 22b and the fourth port 22d communicate and the first port 22a and the third port 22c communicate. Due to this, the discharge side of the compressor 21 (here, the discharge pipe 32) and the gas refrigerant linking pipe 6 side (here, the second gas refrigerant pipe 34) are connected (refer to the dashed line in the four way valve 22 in Fig. 1). Moreover, the suction side of the compressor 21 (here, the suction pipe 31) and the gas side of the outdoor heat exchanger 23 (here, the first gas refrigerant pipe 33) are connected (refer to the dashed line in the four way valve 22 in Fig. 1). The first gas coolant pipe 33 is a refrigerant pipe for connecting the third port 22c of the four way valve 22 and the gas side of the outdoor heat exchanger 23. The second gas refrigerant pipe 34 is a coolant pipe for connecting the fourth port 22d of the four way valve 22 and the gas refrigerant linking pipe 6 side.

The outdoor heat exchanger 23 is a heat exchanger that functions as a radiator for refrigerant with the outdoor air as a source for cooling during the cooling operation and functions as an evaporator for refrigerant with the outdoor air as a source for heating during the heating operation. The liquid side of the outdoor heat exchanger 23 is connected with a liquid refrigerant pipe 35 and the gas side of the outdoor heat exchanger 23 is connected with the first gas refrigerant pipe 33. The liquid refrigerant pipe 35 is a refrigerant pipe which connects the liquid side of the outdoor heat exchanger 23 and the liquid refrigerant linking pipe 5 side.

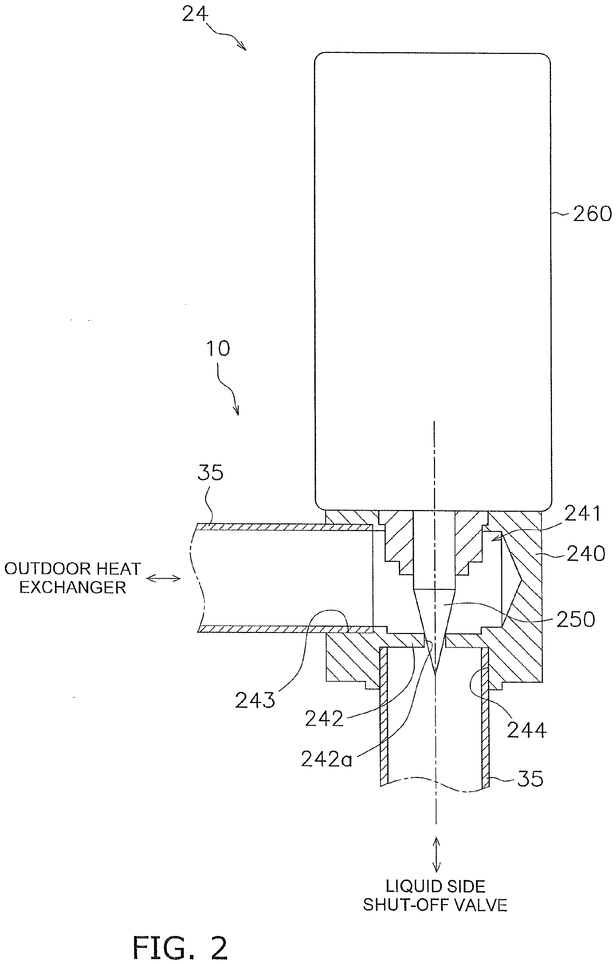

The expansion valve 24 is a valve which depressurizes high-pressure refrigerant to low-pressure in the refrigerating cycle where heat is released in the outdoor heat exchanger 23 during the cooling operation. In addition, the expansion valve 24 is a valve which depressurizes high-pressure refrigerant to low-pressure in the refrigerating cycle where heat is released in the indoor heat exchanger 41 during the heating operation. The expansion valve 24 is provided in a portion in the liquid refrigerant pipe 35 which is closer to the liquid side shut-off valve 26. Here, an electric expansion valve is used as the expansion valve 24. In more detail, the expansion valve 24 mainly has a valve main body 240, a valve body 250, and a driving mechanism 260 as shown in Fig. 2. The valve main body 240 is a member where a valve seat 242 which is an opening in a valve chamber 241 is formed. A first refrigerant port 243 which is an opening toward the side of the valve chamber 241 and a second refrigerant port 244 which is an opening toward the bottom of the valve chamber 241 are formed in the valve main body 240. Then, the first refrigerant port 243 is connected with a portion of the liquid refrigerant pipe 35 which is closer to the outdoor heat exchanger 23 and the second refrigerant port 244 is connected with a portion of the liquid refrigerant pipe 35 which is closer to the liquid side shut-off valve 26. As a result, the expansion valve 24 is provided in the refrigerant circuit 10 in a state with an arrangement where refrigerant flows in with a horizontal orientation and refrigerant flows out in a downward direction during the cooling operation (referred to below as "positive cycle arrangement state"). An orifice hole 242a, which is an opening so that the valve chamber 241 and the second refrigerant port 244 communicate in an up and down direction, is formed in the valve seat 242. The valve body 250 is a member which advances and retreats with regard to the valve seat 242 in the up and down direction due to the driving mechanism 260. The driving mechanism 260 is formed from a motor, a solenoid, or the like. With this configuration, the expansion valve 24 depressurizes high-pressure refrigerant to low pressure in the refrigerating cycle which flows through the liquid refrigerant pipe 35.

The accumulator 25 is a container for temporarily accumulating low-pressure refrigerant which is sucked into the compressor 21. The accumulator 25 is provided in the suction pipe 31.

The liquid side shut-off valve 26 and the gas side shut-off valve 27 are valves which are provided with connection ports with external equipment and piping (in detail, the liquid refrigerant linking pipe 5 and the gas refrigerant linking pipe 6). The liquid side shut-off valve 26 is provided at an end section of the liquid refrigerant pipe 35. The gas side shut-off valve 27 is provided at an end section of the second gas refrigerant pipe 34.

The outdoor unit 2 has an outdoor fan 36 for sucking outdoor air into the outdoor unit 2 and discharging outdoor air to the outside after outdoor air has exchanged heat with refrigerant in the outdoor heat exchanger 23. That is, the outdoor unit 2 has the outdoor fan 36 as a fan which supplies outdoor air to the outdoor heat exchanger 23 as a source for heating or a source for cooling of refrigerant which flows through the outdoor heat exchanger 23. Here, a propeller fan or the like, which is driven by an outdoor fan motor 37, is used as the outdoor fan 36.

Various types of sensors are provided in the outdoor unit 2. In detail, an outdoor heat exchanger temperature sensor 38, which detects a temperature Tor of refrigerant in the outdoor heat exchanger 23, is provided in the outdoor heat exchanger 23. An outdoor air temperature sensor 39, which detects a temperature Toa of outdoor air which is sucked into the outdoor unit 2, is provided in the outdoor unit 2. A suction temperature sensor 47, which detects a temperature Ts of low-pressure refrigerant in the refrigerating cycle which is sucked into the compressor 21, is provided in the suction pipe 31 or the compressor 21. A discharge temperature sensor 48, which detects a temperature Td of high-pressure refrigerant in the refrigerating cycle which is discharged from the compressor 21, is provided in the discharge pipe 32 or the compressor 21. A discharge pressure sensor 49, which detects a pressure Pd of high-pressure refrigerant in the refrigerating cycle which is discharged from the compressor 21, is provided in the discharge pipe 32 or the compressor 21.

The outdoor unit 2 has an outdoor side control section 40 which controls the actions of each section which configures the outdoor unit 2. Then, the outdoor side control section 40 has a microcomputer, a memory, and the like which are provided in order to perform controlling of the outdoor unit 2 and it is possible to perform exchanging of control signals and the like between the outdoor side control section 46 and the outdoor unit 2 via the transmission wire 7.

### < Refrigerant Linking Pipe>

When installing the air conditioner 1 at an installation location such as on a building, the refrigerant linking pipes 5 and 6 are refrigerant pipes where construction work is carried out onsite and use refrigerant pipes with various lengths and pipe diameters according to installation conditions such as the installation location and combination of the outdoor unit and the indoor unit.

As described above, the refrigerant circuit 10 of the air conditioner 1 is configured by connecting the outdoor unit 2, the indoor unit 4, and the refrigerant linking pipes 5 and 6. Due to the four way valve 22 switching to the cooling cycle state, the air conditioner 1 performs the cooling operation by driving the outdoor fan 36 and circulating refrigerant in order of the compressor 21, the outdoor heat exchanger 23, the expansion valve 24, and the indoor heat exchanger 41. In addition, due to the four way valve 22 switching to the heating cycle state, the air conditioner 1 performs the heating operation by driving the outdoor fan 36 and circulating refrigerant in order of the compressor 21, the indoor heat exchanger 41, the expansion valve 24, and the outdoor heat exchanger 23. Here, there is a configuration where it is possible to operate by switching between the cooling operation and the heating operation, but there may be a configuration without a four way valve where only the cooling operation is possible.

### <Control Section>

It is possible for the air conditioner 1 to perform controlling of each of the devices in the outdoor unit 2 and the indoor unit 4 using the control section 8 which is configured from the indoor side control section 46 and the outdoor side control section 40. That is, the control section 8, which performs operational control of the entirety of the air conditioner 1 which includes the cooling operation and the heating operation as described above, using the transmission wire 7 which connects between the indoor side control section 46 and the outdoor side control section 40.

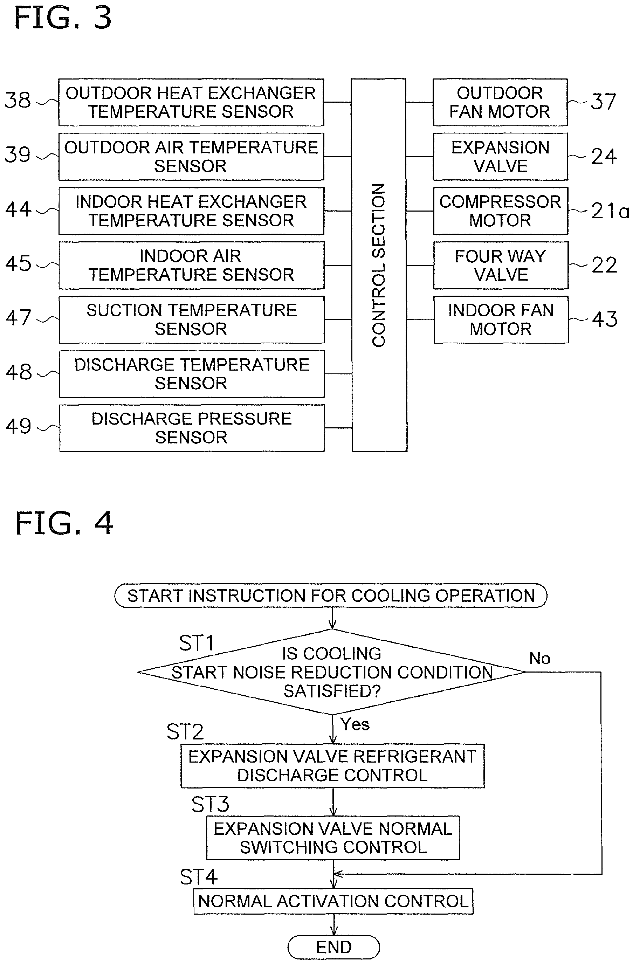

As shown in Fig. 3, the control section 8 connects so that it is possible to receive detection signals from the various sensors 38, 39, 44, 45, 47-49 and the like and connects so that it is possible to control the various devices and the valves 21, 22, 24, 37, 43, and the like based on the detection signals.

### (2) Basic Air Conditioner Actions

Next, the basic actions of the air conditioner 1 (the actions excluding cooling activation control which will be described later) will be described using Fig. 1. It is possible for the air conditioner 1 to perform the cooling operation and the heating operation as basic actions.

### <Heating Operation>

The four way valve 22 switches to the heating cycle state (a state which is indicated by a dashed line in Fig. 1) during the heating operation.

In the refrigerant circuit 10, low-pressure gas refrigerant in the refrigerating cycle is sucked into the compressor 21 and is discharged after being compressed so as to reach high pressure in the refrigerating cycle.

High-pressure gas refrigerant which is discharged from the compressor 21 is sent to the indoor heat exchanger 41 via the four way valve 22, the gas side shut-off valve 27, and the gas refrigerant linking pipe 6.

High-pressure gas refrigerant which is sent to the indoor heat exchanger 41 becomes high-pressure liquid refrigerant due to heat being released by heat exchange being performed with indoor air, which is supplied as a source for cooling using the indoor fan 42, in the indoor heat exchanger 41. Due to this, indoor heating is performed by indoor air being heated, and after this, supplied indoors.

High-pressure liquid refrigerant which releases heat using the indoor heat exchanger 41 is sent to the expansion valve 24 via the liquid refrigerant linking pipe 5 and the liquid side shut-off valve 26.

High-pressure liquid refrigerant which is sent to the expansion valve 24 becomes low-pressure refrigerant in a state being in two phases of liquid and gas by depressurizing to low pressure in the refrigerating cycle using the expansion valve 24. Low-pressure refrigerant in a state being in two phases of liquid and gas which is depressurized using the expansion valve 24 is sent to the outdoor heat exchanger 23.

Low-pressure coolant in a state being in two phases of liquid and gas which is sent to the outdoor heat exchanger 23 becomes low-pressure gas refrigerant due to evaporation by heat exchange being performed with outdoor air, which is supplied as a source for heating using the outdoor fan 36, in the outdoor heat exchanger 23.

Low-pressure refrigerant which is subject to evaporation using the outdoor heat exchanger 23 is again sucked into the compressor 21 via the four way valve 22.

### <Cooling Operation>

The four way valve 22 switches to the cooling cycle state (a state which is indicated by a solid line in Fig. 1) during the cooling operation.

In the refrigerant circuit 10, low-pressure gas refrigerant in the refrigerating cycle is sucked into the compressor 21 and is discharged after being compressed so as to reach high pressure in the refrigerating cycle.

High-pressure gas refrigerant which is discharged from the compressor 21 is sent to the outdoor heat exchanger 23 via the four way valve 22.

High-pressure gas refrigerant which is sent to the outdoor heat exchanger 23 becomes high-pressure liquid refrigerant due to heat being released by heat exchange being performed with outdoor air, which is supplied as a source for cooling using the outdoor fan 36, in the outdoor heat exchanger 23.

High-pressure liquid refrigerant which releases heat using the outdoor heat exchanger 23 is sent to the expansion valve 24.

High-pressure liquid refrigerant which is sent to the expansion valve 24 becomes low-pressure refrigerant in a state being in two phases of liquid and gas by depressurizing to low pressure in the refrigerating cycle using the expansion valve 24. Low-pressure refrigerant in a state being in two phases of liquid and gas which is depressurized using the expansion valve 24 is sent to the indoor heat exchanger 41 via the liquid side shut-off valve 26 and the liquid refrigerant linking pipe 5.

Low-pressure refrigerant in a state being in two phases of liquid and gas which is sent to the indoor heat exchanger 41 is subject to evaporation by heat exchange being performed with indoor air, which is supplied as a source for heating using the indoor fan 42, in the indoor heat exchanger 41. Due to this, indoor cooling is performed by indoor air being cooled, and after this, supplied indoors.

Low-pressure refrigerant which is subject to evaporation using the indoor heat exchanger 41 is again sucked into the compressor 21 via the gas refrigerant linking pipe 6, the gas side shut-off valve 27, and the four way valve 22.

### (3) Cooling Activation Control

There is a problem in terms of cavitation noise in the expansion valve 24 during the cooling operation. In particular, cavitation noise in the expansion valve 24 most remarkably appears when starting the cooling operation under low temperature conditions such as when the outdoor temperature is low.

With regard to cavitation noise in the expansion valve 24 when starting the cooling operation under the low temperature conditions in this manner, the inventors of the present application focus on the relationship between cavitation noise in the expansion valve 24 and the state of refrigerant at the inlet and outlet ports of the expansion valve 24. Then, the state of refrigerant at the inlet and outlet ports of the expansion valve 24 is in a one-phase liquid state when starting the cooling operation under the low temperature conditions, and due to the effect of this, it was found that cavitation noise in the expansion valve 24 is remarkable. That is, it was found that the state of refrigerant at the inlet and outlet ports in the expansion valve 24 when starting the cooling operation affects cavitation noise in the expansion valve 24. That is, cavitation noise in the expansion valve 24 remarkably appears when starting the cooling operation when there is no change in the state where liquid refrigerant has accumulated at the inlet and outlet ports of the expansion valve 24. However, cavitation noise in the expansion valve 24 is suppressed when starting the cooling operation in a state where liquid refrigerant has not accumulated at the inlet and outlet ports of the expansion valve 24.

Therefore, in the air conditioner 1 according to the present embodiment, it is determined whether or not a cooling start noise reduction condition, which shows that the state of refrigerant at the inlet and outlet ports of the expansion valve 24 is in the one-phase liquid state, is satisfied in the cooling activation control which is performed when starting the cooling operation as follows. Then, cavitation noise in the expansion valve 24 is sufficiently suppressed when starting the cooling operation under low temperature conditions due to an expansion valve refrigerant discharge control and an expansion valve normal switching control being performed in the case where the cooling start noise reduction condition is satisfied.

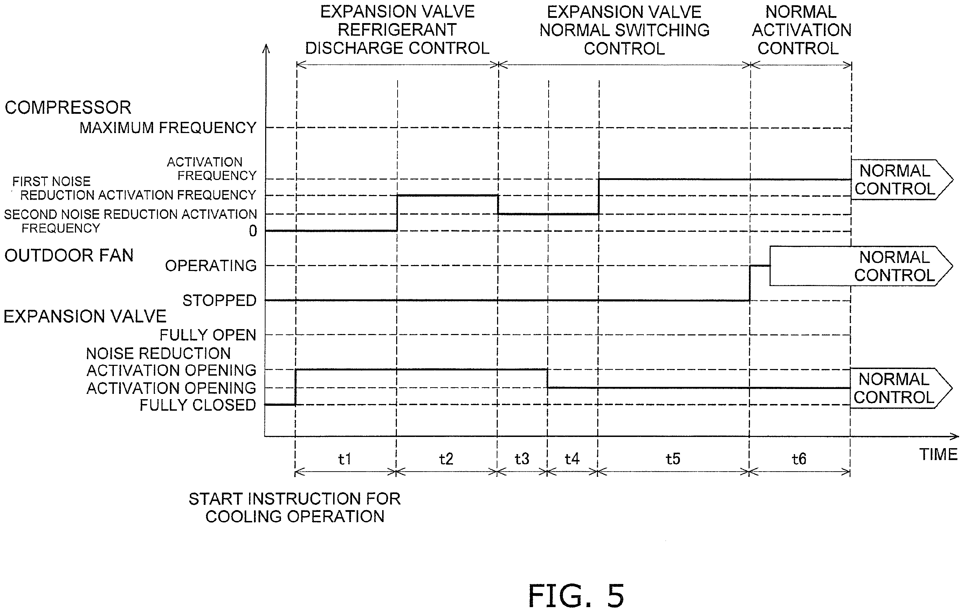

Next, the cooling activation control in the present embodiment will be described using Fig.1 to Fig. 5. Here, Fig. 4 is a flow chart of the cooling activation control. Fig. 5 is a time chart for the compressor 21, the outdoor fan 36, and the expansion valve 24 during the cooling activation control (in a case where the cooling start noise reduction condition is satisfied). Here, the cooling activation control which is described below is performed by the control section 8 in the same manner as the basic actions described above.

### <Steps ST1 and ST4>

When there is a starting instruction for the cooling operation through the remote control (which is not shown in the diagram) or the like, first, the control section 8 performs a determination process in step ST1. It is determined in step ST1 whether or not the cooling start noise reduction condition, which shows that the state of refrigerant at the inlet and outlet ports of the expansion valve 24 is in a one-phase liquid state, is satisfied when starting the cooling operation. Due to this, it is possible to determine whether or not the cooling operation is starting under the low temperature conditions due to the state of refrigerant at the inlet and outlet ports in the expansion valve 24 which is a direct indicator of whether or not there are conditions such that cavitation noise in the expansion valve 24 will remarkably appear.

Here, it is determined that the cooling start noise reduction condition is satisfied in a case where an expansion valve reference temperature Tev, which is the temperature of refrigerant at the inlet and outlet ports of the expansion valve 24, is lower than a noise countermeasure determining temperature Tevs which is a threshold which is obtained from the temperature of the indoor heat exchanger 41. This is because it is possible to see that refrigerant at the inlet and outlet ports of the expansion valve 24 has a refrigerant saturation temperature or less in a case where the expansion valve reference temperature Tev is less than a temperature which is close to the temperature on the indoor side when starting the cooling operation. Here, providing of a temperature sensor at the inlet and outlet ports of the expansion valve 24 and using a temperature value which is detected by the temperature sensor as the expansion valve reference temperature Tev has been considered. However, the temperature Tor in the outdoor heat exchanger 23 which is a temperature which is equivalent to this is used in order for temperature sensors to not be provided at the inlet and outlet ports of the expansion valve 24. Here, the outside air temperature Toa, which is a temperature which is equivalent to the temperature Tor, may be used as the expansion valve reference temperature Tev instead of the temperature Tor in the outdoor heat exchanger 23. In addition, it is possible to use a threshold which is obtained from the temperature Trr in the indoor heat exchanger 41 as the noise countermeasure determining temperature Tevs. Here, a threshold which is obtained from an indoor temperature Tra, which is a temperature which is equivalent to the temperature Trr, may be used as the noise countermeasure determining temperature Tevs instead of the temperature Trr in the indoor heat exchanger 41. Due to this, it is possible to correctly determine whether or not the cooling start noise reduction condition is satisfied using the expansion valve reference temperature Tev and the noise countermeasure determining temperature Tevs.

Then, in a case where the cooling start noise reduction condition is not satisfied in step ST1, the process moves to the process of step ST4 and a normal activation control is performed. That is, in a case of starting the cooling operation not under the low temperature conditions, the activation control when normally starting the cooling operation is performed since the state of refrigerant at the inlet and outlet ports of the expansion valve 24 is not in a one-phase liquid state and there are not the conditions where cavitation noise in the expansion valve 24 remarkably appears. As a result, only the process of the normal activation control is performed prior to switching to the normal control without performing the processes of step ST2 and ST3 in a case where the cooling start noise reduction condition is not satisfied in step ST1. In detail, the opening of the expansion valve 24 is set as an activation opening Xni, the outdoor fan 36 is driven, and the compressor 21 is driven by the operating frequency of the compressor 21 being set to an activation frequency fni. Here, the process of step ST4 is performed in approximately 10 seconds to 30 seconds (refer to time t6 in Fig. 5), and after this, the process switches to the normal control.

On the other hand, in a case where the cooling start noise reduction condition is satisfied in step ST1, the process moves to step ST2 described below and the process of normal activation control in step ST4 is performed after the processes of step ST2 and ST3 are performed.

### <Step ST2>

In step ST2, the expansion valve refrigerant discharge control, where the compressor 21 is driven in a state where the outdoor fan 36 is stopped and the expansion valve 24 is open, is performed. In detail, the compressor 21 is driven after approximately 10 seconds to 30 seconds has elapsed (refer to time t1 in Fig. 5) in a state where the outdoor fan 36 is stopped and the expansion valve 24 is open. Due to this, it is possible to create a state where liquid refrigerant has not accumulated at the inlet and outlet ports of the expansion valve 24 by discharging liquid refrigerant at expansion valve 24 and at the inlet and outlet ports thereof to the indoor heat exchanger 41 side. That is, it is possible for liquid refrigerant to flow smoothly to the indoor heat exchanger 41 side while as little liquid refrigerant as possible is supplied to the expansion valve 24 by suppressing refrigerant condensing performance in the outdoor heat exchanger 23 due to the outdoor fan 36 being stopped and the expansion valve 24 being open when driving the compressor 21.

Here, liquid refrigerant smoothly flows through the expansion valve 24 to the indoor heat exchanger 41 side in the expansion valve refrigerant discharge control due to the expansion valve 24 being open. However, at this time, there is a concern that liquid refrigerant will return from the indoor heat exchanger 41 side to the compressor 21 via the gas refrigerant linking pipe 6, the four way valve 22, and the like if operating frequency of the compressor 21 is high. Therefore, here, the operating frequency of the compressor 21 is set to a first noise reduction activation frequency fevi1 which is less than an activation frequency fni which is the operating frequency of the compressor 21 when starting the cooling operation in a case where the cooling start noise reduction condition is not satisfied. It is preferable that the first noise reduction activation frequency fevi1 be set to an operating frequency which is half or less of the activation frequency fni. Due to this, it is possible to suppress the concern that liquid refrigerant will return from the indoor heat exchanger 41 side to the compressor 21 while obtaining a smooth flow of liquid refrigerant to the indoor heat exchanger 41 side in the expansion valve refrigerant discharge control. Here, the operating frequency of the compressor 21 may need not to be lower than the activation frequency fni in a case where there is no concern that the smooth flow of liquid refrigerant to the indoor heat exchanger 41 side will be impeded or concern that liquid refrigerant will return from the indoor heat exchanger 41 side to the compressor 21 in the expansion valve refrigerant discharge control.

In addition, liquid refrigerant smoothly flows through the expansion valve 24 to the indoor heat exchanger 41 side in the expansion valve refrigerant discharge control due to the expansion valve 24 being open. However, at this time, there is a concern that flow path resistance when refrigerant passes through the expansion valve 24 will be large if the opening of the expansion valve 24 is small and smooth flow of liquid refrigerant to the indoor heat exchanger 41 side will be impeded. Therefore, here, the opening of the expansion valve 24 is set to a noise reduction activation opening Xevi which is larger than an activation opening Xni when starting the cooling operation in a case where the cooling start noise reduction condition is not satisfied. It is preferable that the noise reduction activation opening Xevi be set to an opening which is double or more of the activation opening Xni. It is possible to reliably obtain a smooth flow of liquid refrigerant to the indoor heat exchanger 41 side with flow path resistance, when refrigerant passes through the expansion valve 24, as small as possible in the expansion valve refrigerant discharge control. Here, the opening of the expansion valve 24 may need not to be larger than the activation opening Xni in a case where there is no concern that the smooth flow of liquid refrigerant to the indoor heat exchanger 41 side will be impeded in the expansion valve refrigerant discharge control.

Then, the process moves to the process of step ST3 after approximately 10 seconds to 30 seconds has elapsed since driving the compressor 21 (refer to time t2 in Fig. 5).

### <Step ST3>

In step ST3, the expansion valve normal switching control, where the opening of the expansion valve 24 is reduced and the operating frequency of the compressor 21 is increased, is performed after the expansion valve refrigerant discharge control in step ST2. In detail, the opening of the expansion valve 24 is reduced to the activation opening Xni when starting the cooling operation in a case where the cooling start noise reduction condition is not satisfied and the operating frequency of the compressor 21 is increased to the activation frequency fni which is the operating frequency of the compressor 21 when starting the cooling operation in a case where the cooling start noise reduction condition is not satisfied. Due to this, it is possible to suppress cavitation noise in the expansion valve 24 by switching to normal control of the expansion valve 24, that is, switching to normal control after normal activation control in step ST4 in a state of having created a state where liquid refrigerant has not accumulated at the inlet and outlet ports of the expansion valve 24. In addition, there is a tendency as in the present embodiment for it to be easy for cavitation noise in the expansion valve 24 to be generated in a case of providing the refrigerant circuit 10 where the expansion valve 24 is in a positive cycle arrangement state, that is, in a state with an arrangement where refrigerant flows in with a horizontal orientation and refrigerant flows out in a downward direction during the cooling operation. However, it is possible to sufficiently suppress cavitation noise in the expansion valve 24 even if the expansion valve 24 is arranged in a positive cycle arrangement state due to the expansion valve refrigerant discharge control and the expansion valve normal switching control being performed as described above.

In addition, a case is assumed where an action of reducing the opening of the expansion valve 24 is performed after the operating frequency of the compressor 21 is increased when switching from the expansion valve refrigerant discharge control to the expansion valve normal switching control. In this case, due to the state, which is only temporary, where the operating frequency of the compressor 21 is high in a state where the opening of the expansion valve 24 is large, there is a concern that liquid refrigerant will return from the indoor heat exchanger 41 side to the compressor 21 via the gas refrigerant linking pipe 6, the four way valve 22, and the like. Therefore, here, the opening of the expansion valve 24 is reduced before the operating frequency of the compressor 21 is increased when switching from the expansion valve refrigerant discharge control to the expansion valve normal switching control. In detail, the action of increasing the operating frequency of the compressor 21 is performed after approximately 5 seconds to 15 seconds has elapsed since performing the action of reducing the opening of the expansion valve 24 (refer to time t4 in Fig. 5). Due to this, it is possible to suppress the concern that liquid refrigerant will return from the indoor heat exchanger 41 side to the compressor 21 after the expansion valve refrigerant discharge control. Here, the action of reducing the opening of the expansion valve 24 before increasing the operating frequency of the compressor 21 need not be performed in a case where there is no concern that liquid refrigerant will return from the indoor heat exchanger 41 side to the compressor 21.

In addition, a case is assumed where an action of reducing the opening of the expansion valve 24 is performed while the operating frequency of the compressor 21 is maintained as it is when switching from the expansion valve refrigerant discharge control to the expansion valve normal switching control. In this case, there is a tendency for the pressure of refrigerant to be raised at a portion of the refrigerant circuit 10 on the upstream side of the expansion valve 24. If this is the case, there are several concerns with a state where the inlet and outlet ports in the expansion valve 24 are filled again with liquid refrigerant even if a state is created where the flow rate of liquid refrigerant which flows into the expansion valve 24 increases and liquid refrigerant has not accumulated at the inlet and outlet ports of the expansion valve 24 due to the expansion valve refrigerant discharge control. Therefore, here, the opening of the expansion valve 24 is reduced in a state where the operating frequency of the compressor 21 is temporarily reduced when switching from the expansion valve refrigerant discharge control to the expansion valve normal switching control. In detail, the operating frequency of the compressor 21 is reduced to a second noise reduction activation frequency fevi2 which is lower than the first noise reduction activation frequency fevi1 approximately 5 seconds to 15 seconds before the action of reducing the opening of the expansion valve (refer to time t3 in Fig. 5). It is preferable that the second noise reduction activation frequency fevi2 be, for example, zero (the compressor 21 is stopped). Due to this, it is possible to suppress a state where the inlet and outlet ports of the expansion valve 24 are filled again with liquid refrigerant after the expansion valve refrigerant discharge control by suppressing the tendency for the pressure of refrigerant to be raised at a portion of the refrigerant circuit 10 on the upstream side of the expansion valve 24. Here, the state where the operating frequency of the compressor 21 is reduced to the second noise reduction activation frequency fevi2 is cancelled approximately 5 seconds to 15 seconds after the action of reducing the opening of the expansion valve (refer to time t4 in Fig. 5). Then, the operating frequency of the compressor 21 is operated so as to increase to the activation frequency fni. Here, the action of temporarily reducing the operating frequency of the compressor 21 when the opening of the expansion valve 24 is small need not be performed in a case where there is no concern of a state where the inlet and outlet ports of the expansion valve 24 are filled again with liquid coolant.

Then, the process moves to the process of step ST4 after approximately 20 seconds to 40 seconds has elapsed since increasing the operating frequency of the compressor 21 (refer to time t5 in Fig. 5).

In this manner, the cooling activation control (which includes the expansion valve coolant discharge control and the expansion valve normal switching control which are performed in a case where the cooling start noise reduction condition is satisfied) is performed in the air conditioner 1 of the present embodiment. Then, due to this cooling activation control, it is possible to sufficiently suppress cavitation noise in the expansion valve 24 when starting the cooling operation under the low temperature conditions.

### INDUSTRIAL APPLICABILITY

It is possible for the present invention to be widely applied with regard to air conditioners which perform a cooling operation by driving an outdoor fan and circulating coolant in order of a compressor, an outdoor heat exchanger, an expansion valve, and an indoor heat exchanger.

### REFERENCE SIGNS LIST

- 1: AIR CONDITIONER
- 10: REFRIGERANT CIRCUIT
- 21: COMPRESSOR
- 23: OUTDOOR HEAT EXCHANGER
- 41: INDOOR HEAT EXCHANGER
- 24: EXPANSION VALVE
- 36: OUTDOOR FAN

### CITATION LIST

### PATENT LITERATURE

PTL 1: Japanese Unexamined Patent Application Publication No. 9-133434

## Claims

1. An air conditioner (1) comprising:
a refrigerant circuit (10) which is configured by connecting a compressor (21), an outdoor heat exchanger (23), an expansion valve (24), and an indoor heat exchanger (41); and
an outdoor fan (36) which supplies outdoor air to the outdoor heat exchanger as a source for cooling of refrigerant which flows through the outdoor heat exchanger,
wherein a cooling operation is performed by driving the outdoor fan and circulating refrigerant in order of the compressor, the outdoor heat exchanger, the expansion valve, and the indoor heat exchanger,
a control section (8) is configured to perform an expansion valve refrigerant discharge control, where the compressor is driven in a state where the outdoor fan is stopped and the expansion valve is open, and
the control section (8) is configured to perform an expansion valve normal switching control, where an opening of the expansion valve is reduced and an operating frequency of the compressor is increased, after the expansion valve refrigerant discharge control **characterized in that** the control section (8) is configured to perform the expansion valve refrigerant discharge control when a cooling start noise reduction condition that a state of refrigerant at inlet and outlet ports of the expansion valve is in a one-phase liquid state is satisfied when starting the cooling operation.

2. The air conditioner (1) according to claim 1, wherein
the control section (8) is configured to determine that the cooling start noise reduction condition is satisfied in a case where an expansion valve reference temperature which is a temperature of refrigerant at the inlet and outlet ports of the expansion valve (24) or a temperature in the outdoor heat exchanger (23) or an outside air temperature is lower than a noise countermeasure determining temperature which is a threshold which is obtained from a temperature of the indoor heat exchanger (41) or an indoor temperature.

3. The air conditioner (1) according to claim 1 or 2, wherein
the control section (8) is configured to set the operating frequency of the compressor (21) in the expansion valve refrigerant discharge control to a noise reduction activation frequency which is lower than an activation frequency which is an operating frequency of the compressor when starting the cooling operation in a case where the cooling start noise reduction condition is not satisfied.

4. The air conditioner (1) according to any of claims 1 to 3, wherein
the control section (8) is configured to set the opening of the expansion valve (24) in the expansion valve refrigerant discharge control to a noise reduction activation opening which is larger than an activation opening which is the opening of the expansion valve when starting the cooling operation in a case where the cooling start noise reduction condition is not satisfied.

5. The air conditioner (1) according to any of claims 1 to 4, wherein
the control section (8) is configured to reduce the opening of the expansion valve (24) before the operating frequency of the compressor (21) is increased when switching from the expansion valve refrigerant discharge control to the expansion valve normal switching control.

6. The air conditioner (1) according to any of claims 1 to 5, wherein
the control section (8) is configured to reduce the opening of the expansion valve (24) in a state where the operating frequency of the compressor (21) is temporarily reduced when switching from the expansion valve refrigerant discharge control to the expansion valve normal switching control.

7. The air conditioner (1) according to any of claims 1 to 6, wherein
the expansion valve (24) is provided in the refrigerant circuit (10) in a state with an arrangement where refrigerant flows in with a horizontal orientation and refrigerant flows out in a downward direction during the cooling operation.

## Patentansprüche

1. Klimaanlage (1), umfassend:
einen Kühlmittelkreislauf (10), der konfiguriert ist durch Verbinden eines Kompressors (21), eines Außenraum-Wärmetauschers (23), eines Expansionsventils (24) und eines Innenraum-Wärmetauschers (41); und
einen Außenraumlüfter (36), der Außenraumluft zu dem Außenraum-Wärmetauscher als eine Quelle zum Kühlen eines Kühlmittels zuführt, das durch den Außenraum-Wärmetauscher strömt,
wobei ein Kühlvorgang durchgeführt wird, indem der Außenraumlüfter angetrieben wird und Kühlmittel in der Reihenfolge von Kompressor, Außenraum-Wärmetauscher, Expansionsventil und Innenraum-Wärmetauscher zirkuliert wird,
ein Steuerungsabschnitt (8) konfiguriert ist, eine Expansionsventil-Kühlmittel-Auslasssteuerung durchzuführen, wo der Kompressor in einem Zustand betrieben wird, wo der Außenraumlüfter angehalten ist und das Expansionsventil offen ist, und
der Steuerungsabschnitt (8) konfiguriert ist, eine Expansionsventil-Normalschaltsteuerung durchzuführen, wo eine Öffnung des Expansionsventils verringert ist und eine Betriebsfrequenz des Kompressors erhöht wird, nach der Expansionsventil-Kühlmittel-Auslasssteuerung,
**dadurch gekennzeichnet, dass** der Steuerungsabschnitt (8) konfiguriert ist, die Expansionsventil-Kühlmittel-Auslasssteuerung durchzuführen, wenn eine Kühlstart-Lärmverminderungsbedingung, die ein Zustand von Kühlmittel an Einlass- und Auslassanschlüssen des Expansionsventils ist, in einem Einphasen-Flüssigkeitszustand erfüllt ist, wenn der Kühlvorgang gestartet wird.

2. Klimaanlage (1) nach Anspruch 1, wobei
der Steuerungsabschnitt (8) konfiguriert ist, zu bestimmen, dass die Kühlstart-Lärmverminderungsbedingung in einem Fall erfüllt ist, wo eine Expansionsventil-Referenztemperatur, die eine Temperatur des Kühlmittels an den Einlass- und Auslassanschlüssen des Expansionsventils (24) ist, oder eine Temperatur im Außenraum-Wärmetauscher (23) oder eine Außenraum-Lufttemperatur niedriger ist als eine Lärm-Gegenmaßnahme-Bestimmungstemperatur, die ein Schwellenwert ist, der aus einer Temperatur des Innenraum-Wärmetauschers (41) oder einer Innenraumtemperatur erhalten wird.

3. Klimaanlage (1) nach Anspruch 1 oder 2, wobei
der Steuerungsabschnitt (8) konfiguriert ist, die Betriebsfrequenz des Kompressors (21) in der Expansionsventil-Kühlmittel-Auslasssteuerung auf eine Lärmverminderungs-Aktivierungsfrequenz einzustellen, die niedriger ist als eine Aktivierungsfrequenz, die eine Betriebsfrequenz des Kompressors ist, wenn der Kühlvorgang gestartet wird, in einem Fall, wo die Kühlstart-Lärmverminderungsbedingung nicht erfüllt ist.

4. Klimaanlage (1) nach einem der Ansprüche 1 bis 3, wobei
der Steuerungsabschnitt (8) konfiguriert ist, die Öffnung des Expansionsventils (24) in der Expansionsventil-Kühlmittel-Auslasssteuerung auf eine Lärmverminderungs-Aktivierungsöffnung einzustellen, die größer ist als eine Aktivierungsöffnung, die die Öffnung des Expansionsventils ist, wenn der Kühlvorgang gestartet wird, in einem Fall, wo die Kühlstart-Lärmverminderungsbedingung nicht erfüllt ist.

5. Klimaanlage (1) nach einem der Ansprüche 1 bis 4, wobei
der Steuerungsabschnitt (8) konfiguriert ist, die Öffnung des Expansionsventils (24) zu verringern, bevor die Betriebsfrequenz des Kompressors (21) erhöht wird, wenn von der Expansionsventil-Kühlmittel-Auslasssteuerung in die Expansionsventil-Normalschaltsteuerung umgeschaltet wird.

6. Klimaanlage (1) nach einem der Ansprüche 1 bis 5, wobei
der Steuerungsabschnitt (8) konfiguriert ist, die Öffnung des Expansionsventils (24) in einem Zustand zu verringern, wo die Betriebsfrequenz des Kompressors (21) temporär verringert wird, wenn von der Expansionsventil-Kühlmittel-Auslasssteuerung in die Expansionsventil-Normalschaltsteuerung umgeschaltet wird.

7. Klimaanlage (1) nach einem der Ansprüche 1 bis 6, wobei
das Expansionsventil (24) im Kühlmittelkreislauf (10) in einem Zustand mit einer Anordnung vorgesehen ist, wo das Kühlmittel mit einer horizontalen Ausrichtung einströmt und das Kühlmittel in einer Abwärtsrichtung während des Kühlvorgangs ausströmt.

## Revendications

1. Dispositif de climatisation (1) comprenant :
un circuit de réfrigérant (10) qui est configuré par raccordement d'un compresseur (21), d'un échangeur de chaleur extérieur (23), d'une soupape d'expansion (24), et d'un échangeur de chaleur intérieur (41) ; et
un ventilateur extérieur (36) qui alimente en air extérieur l'échangeur de chaleur extérieur comme une source de refroidissement de réfrigérant qui circule à travers l'échangeur de chaleur extérieur,
dans lequel une opération de refroidissement est réalisée par entraînement du ventilateur extérieur et circulation de réfrigérant dans l'ordre du compresseur, de l'échangeur de chaleur extérieur, de la soupape d'expansion, et de l'échangeur de chaleur intérieur,
une section de commande (8) est configurée pour réaliser une commande d'évacuation de réfrigérant de soupape d'expansion, lorsque le compresseur est entraîné dans un état où le ventilateur extérieur est arrêté et la soupape d'expansion est ouverte, et
la section de commande (8) est configurée pour réaliser une commande de commutation normale de soupape d'expansion, lorsqu'une ouverture de la soupape d'expansion est réduite et une fréquence de fonctionnement du compresseur est augmentée, après la commande d'évacuation de réfrigérant de soupape d'expansion
**caractérisé en ce que** la section de commande (8) est configurée pour réaliser la commande d'évacuation de réfrigérant de soupape d'expansion lorsqu'une condition de réduction de bruit de début de refroidissement qu'un état de réfrigérant à des orifices d'entrée et de sortie de la soupape d'expansion est dans un état liquide à une phase est satisfaite lors du démarrage de l'opération de refroidissement.

2. Dispositif de climatisation (1) selon la revendication 1, dans lequel
la section de commande (8) est configurée pour déterminer que la condition de réduction de bruit de début de refroidissement est satisfaite dans un cas où une température de référence de soupape d'expansion, qui est une température de réfrigérant aux orifices d'entrée et de sortie de la soupape d'expansion (24) ou une température dans l'échangeur de chaleur extérieur (23) ou une température d'air extérieure, est inférieure à une température déterminant une contremesure de bruit qui est un seuil qui est obtenu à partir d'une température de l'échangeur de chaleur intérieur (41) ou d'une température intérieure.

3. Dispositif de climatisation (1) selon la revendication 1 ou 2, dans lequel
la section de commande (8) est configurée pour régler la fréquence de fonctionnement du compresseur (21) dans la commande d'évacuation de réfrigérant de soupape d'expansion à une fréquence d'activation de réduction de bruit qui est inférieure à une fréquence d'activation qui est une fréquence de fonctionnement du compresseur lors du démarrage de l'opération de refroidissement dans un cas où la condition de réduction de bruit de début de refroidissement n'est pas satisfaite.

4. Dispositif de climatisation (1) selon l'une quelconque des revendications 1 à 3, dans lequel
la section de commande (8) est configurée pour régler l'ouverture de la soupape d'expansion (24) dans la commande d'évacuation de réfrigérant de soupape d'expansion à une ouverture d'activation de réduction de bruit qui est supérieure à une ouverture d'activation qui est l'ouverture de la soupape d'expansion lors du démarrage de l'opération de refroidissement dans un cas où la condition de réduction de bruit de début de refroidissement n'est pas satisfaite.

5. Dispositif de climatisation (1) selon l'une quelconque des revendications 1 à 4, dans lequel
la section de commande (8) est configurée pour réduire l'ouverture de la soupape d'expansion (24) avant que la fréquence de fonctionnement du compresseur (21) soit augmentée lors de la commutation de la commande d'évacuation de réfrigérant de soupape d'expansion à la commande de commutation normale de soupape d'expansion.

6. Dispositif de climatisation (1) selon l'une quelconque des revendications 1 à 5, dans lequel
la section de commande (8) est configurée pour réduire l'ouverture de la soupape d'expansion (24) dans un état où la fréquence de fonctionnement du compresseur (21) est temporairement réduite lors de la commutation de la commande d'évacuation de réfrigérant de soupape d'expansion à la commande de commutation normale de soupape d'expansion.

7. Dispositif de climatisation (1) selon l'une quelconque des revendications 1 à 6, dans lequel
la soupape d'expansion (24) est prévue dans le circuit de réfrigérant (10) dans un état avec un agencement où un réfrigérant afflue avec une orientation horizontale et un réfrigérant sort dans une direction vers le bas pendant l'opération de refroidissement.
